# EUROPÄISCHE PATENTSCHRIFT

(11) **EP 1 272 274 B1**
(45) Veröffentlichungstag und Bekanntmachung des Hinweises auf die Patenterteilung: **30.11.2005**
(21) Anmeldenummer: 01938097.1
(22) Anmeldetag: 09.04.2001
(51) Int. Cl.: B01L 3/02

(54) **VERFAHREN ZUR HERSTELLUNG VON BIOPOLYMER-FELDERN MIT ECHTZEITKONTROLLE**
METHOD FOR PRODUCING BIOPOLYMER FIELDS BY MEANS OF REAL-TIME CONTROL
PROCEDE DE PRODUCTION D'ENSEMBLES DE BIOPOLYMERES SOUS CONTROLE EN TEMPS REEL

(30) Priorität: 10.04.2000 DE 10017790
(43) Veröffentlichungstag der Anmeldung: 08.01.2003
(73) Patentinhaber: BASF Aktiengesellschaft, 67056 Ludwigshafen (DE); Deutsches Krebsforschungszentrum Stiftung des öffentlichen Rechts, 69120 Heidelberg (DE)
(72) Erfinder: EIPEL, Heinz, 64625 Bensheim (DE); BEIER, Markus, 69121 Heidelberg (DE); MATYSIAK, Stefan, 88069 Tettnang (DE)
(74) Vertreter: Isenbruck, Günter
(86) Internationale Anmeldenummer: PCT/EP2001/004049
(87) Internationale Veröffentlichungsnummer: WO 2001/076746

(56) Entgegenhaltungen:
- EP-A- 0 505 004
- EP-A- 1 002 570
- WO-A-01/49414
- WO-A-97/40385
- US-A- 5 275 951
- US-A- 5 443 791
- US-A- 5 443 792
- US-A- 5 486 337
- US-A- 5 601 980

## Beschreibung

Die Erfindung bezieht sich auf ein Verfahren zur Herstellung von Biopolymer-Feldern unter Echtzeitkontrolle zur Qualitätsverbesserung erzeugter Biopolymeranordnungen für Analysezwecke.

US-A-5,443,791 bezieht sich auf automatisierte molekularbiologische Laboreinrichtungen. Es wird offenbart, dass eine Kapillarspitze in einer bevorzugten Ausführungsvariante als Teil eines Fühlsystems zur Bestimmung einer Annäherung der Kapillarspitze an eine Oberfläche dient. Die Kapillarspitze besteht aus einem leitenden Material. Eine mit einer Kapazitätsmesseinrichtung verbundene Leitung steht in elektrischem Kontakt mit der Kapillarspitze. Kontaktiert die Kapillarspitze die Probenoberfläche, wird ein Signal an eine Steuereinrichtung übermittelt, die mit einem geeignet ausgebildeten Schaltkreis verbunden ist. Mittels des Schaltkreises wird die Annäherung der Kapillarspitze an die Oberfläche detektiert, auch für den Fall, dass die Kapillarspitze die Oberfläche tatsächlich nicht berührt. Eine Verwendungsmöglichkeit der auf Kapazitäten ansprechenden Kapillarspitze liegt in der Ertastung der Oberfläche von Flüssigkeiten, wenn die Kapillarspitze zum Flüssigkeitstransfer positioniert wird. Durch Ertastung einer Flüssigkeitsoberfläche und dem gleichzeitigen Einhalten der Höhe der Kapillarspitze relativ zur Arbeitsfläche, sowie relativ zur Flüssigkeitsoberfläche, lässt sich das Volumen der Flüssigkeit bestimmen. Die Ertastung der Flüssigkeitsoberfläche erlaubt ebenso eine Aussage darüber, wann diese Flüssigkeit ansaugt, aufnimmt bzw. verliert, um die Kontamination der Kapillarspitze zu minimieren.

US-A-5,601,980 hat ein Herstellungsverfahren sowie eine Vorrichtung für Probenfelder für biologisches Material mit optisch unterstützter Mikropipettierung zum Gegenstand. Die Mikropipette enthält einen Vorrat eines biologischen Probenmaterials, welches in einer Lösung gelöst ist. Die Mikropipette wird in eine bestimmte Position über eine ausgewählte Stelle eines Feldes gefahren. Die Mikropipette steht derart unter Druck, dass das Absondern eines Tröpfchens eines biologischen Probenmaterials an einem offenen Ende der Mikropipette möglich ist. Die Formung des Tröpfchens wird gleichzeitig optisch visualisiert, während die Mikropipette druckbeaufschlagt wird, um das Flüssigkeitsvolumen des abgesonderten Tröpfchens annähernd zu bestimmen. Bei Erreichen eines vorherbestimmbaren Volumens des Tröpfchens wird die Druckbeaufschlagung der Mikropipette abgebrochen. Das Tröpfchen eines vorherbestimmten Volumens wird dann auf den ausgewählten Oberflächenabschnitt aufgebracht.

WO 01/49414A hat ein Probenanalysesystem mit einer hohen Durchsatzrate sowie ein Analyseverfahren zum Gegenstand. Das System umfasst typischerweise Fluideinrichtungen mit integrierten Kapillarelementen zur Ausführung der Analyse der Probenmate rialien. Es sind Prägeeinrichtungen vorhanden, die eine Vielzahl verschiedener Materialien in kleinen Abschnitten aufnehmen. Mittels eines Kapillarsystems wird ein schnelles und akkurates Aufbringen der Proben über Mikrofluideinrichtungen verwirklicht. Zur Steuerung und Auswertung der aufgebrachten Probenmaterialien ist eine Weiterverarbeitungskette nachgeschaltet.

Zur Herstellung von Biopolymer-Feldern oder Biopolymer-Arrays werden heute hauptsächlich zwei Verfahren eingesetzt. Bei einer bisher praktizierten Vorgehensweise zur Übertragung geringster Mengen von Biopolymer-Lösungen auf ein Trägermaterial, werden mittels der Tintenstrahldrucktechnik geringste Mengen von Biopolymer-Lösungen als kleine Messpunkte auf Oberflächen von Objektträgern aufgebracht. Dieses Verfahren ist jedoch wegen auftretender Viskositätsunterschiede der zu applizierenden Probenlösungen sowie gelegentlich auftretender Gasblasenbildung beim Tintenstrahldrucker mit Unsicherheiten bei der Probenapplikation behaftet.

Eine andere Vorgehensweise zum Aufbringen von Biopolymer-Feldern auf Objektträgeroberflächen besteht darin, kleinste Flüssigkeitsmengen von zu analysierenden Proben mittels einer Schreibfeder auf Oberflächen von Objektträgern aufzubringen. Unter Schreibfedern werden in diesem Zusammenhang solche Federn verstanden, wie sie an Füllfederhaltern beispielsweise eingesetzt werden können. Zum Aufbringen von in regelmäßiger Form arrangierten Biopolymer-Arrays ist es notwendig, dass die mit der aufzubringenden Flüssigkeitsprobe benetzte Feder oder Nadel auf der zu beschickenden Oberfläche für die Flüssigkeitsübertragung jedes Mal einen guten Flüssigkeitskontakt herstellt, da sonst die gewünschte Probenmenge nicht oder nicht in ausreichender Menge übertragen werden kann.

Gelegentlich bei der Flüssigkeitsprobenübertragung auftretende Fehler werden häufig erst bei der vollständigen Anordnung sämtlicher Probenflecken eines Biopolymer-Arrays oder Biopolymer-Feldes auf der Oberfläche des jeweiligen Objektträgers festgestellt. Die verbliebenen Lücken in der Biopolymer-Array-Anordnung erschweren eine Auswertung des Biopolymer-Arrays auf automatischem Wege. Das Abwarten der vollständigen Fertigstellung eines fehlerbehafteten Biopolymers ist wirtschaftlich nicht vertretbar.

Zur Kontrolle der Vollständigkeit hergestellter Biopolymer-Felder an der Oberfläche von Objektträgern wurden bisher Videokameras eingesetzt, die jedoch, aufgrund ihrer Baugröße in der miniaturisierten Umgebung des Übertragungsbereiches, wertvollen Platz beanspruchen. Ferner lassen sich die Signale der Videokameras nur mit verhältnismäßig hohem Aufwand automatisch auswerten.

Angesichts der der Lösung aus dem Stande der Technik anhaftenden Nachteile, liegt der Erfindung die Aufgabe zugrunde, eine Qualitätsverbesserung von herzustellenden Biopolymer-Feldern bereits während ihrer Herstellung zu erzielen.

Diese Aufgabe wird gemäß der Erfindung dadurch gelöst, daß bei einem Verfahren zur Feststellung der Probenübertragung bei der Herstellung von Biopolymer-Feldern auf der Oberfläche von Objektträgern die Oberfläche des Objektträgers ein leitfähiges Material enthält, dessen elektrische Verbindung über das Probenmaterial zur Zuführeinrichtung als Rückmeldesignal dient.

Die Vorteile der erfindungsgemäß vorgeschlagenen Lösung sind vor allem darin zu erblicken, daß gemäß des vorgeschlagenen Verfahrens der Flüssigkeitskontakt nach Anlegen einer Spannung durch einen elektrischen Stromfluß zwischen der Zuführeinrichtung und der elektrisch leitfähigen Schicht auf dem Träger festgestellt werden kann. Da die Flüssigkeit innerhalb der Zuführeinrichtung durch darin enthaltene Pufferionen elektrisch leitfähig ist, stellt die auf der leitfähigen Beschichtung des Trägers applizierte, zu analysierende Biopolymerprobe eine Flüssigkeitsbrücke dar, welche den Stromkreis zwischen mit leitfähigem Material versehene Oberfläche des Trägers und der Zuführeinrichtung schließt. Dadurch kann eine in hohem Maße zuverlässige Detektion einer Applikation einer zur Analyse ausreichenden Biopolymerprobe-auf dem Objektträger festgestellt werden, so daß durch ein entsprechend generiertes und verstärktes Rückmeldesignal bei nicht erfolgtem Flüssigkeitskontakt dem Rechner, der die Zuführeinrichtung steuert, der Befehl erteilt wird, den Befüllungs- bzw. Übertragungvorgang zu wiederholen, bis eine Rückmeldung des Flüssigkeitskontaktes erfolgt bzw. nach mehreren erfolglosen Versuchen ein entsprechender Eintrag in das Fehlerprotokoll eines Steuerrechners veranlaßt werden kann.

In weiterer Ausgestaltung des erfindungsgemäßen vorgeschlagenen Verfahrens erfolgt die Kontrolle des Flüssigkeitskontaktes von Proben und Oberfläche des Objektträgers in Echtzeit.

Das Rückmeldesignal wird in besonders vorteilhafter Weise aus einem detektierten Stromfluß zwischen der Zuführeinrichtung und der leitfähigen Oberfläche des Objektträgers generiert. Dabei wird in vorteilhafter Weise die Probenflüssigkeit als Flüssigkeitsbrücke zwischen Zuführeinrichtung und Objektträger benutzt.

Um ein aussagekräftiges weiterverarbeitbares Rückmeldesignal zu erhalten, wird das aus einem detektierten Stromfluß hervorgehende Signal durch eine hochohmige Verstärkeranordnung verstärkt. Dem hochohmigen Verstärker kann auch ein Vorwiderstand von beispielsweise 10 Mega-Ohm vorgeschalten werden.

Das entsprechend verstärkte Rückmeldesignal kann zur automatischen Auslösung einer Wiederholung des Übertragungsvorganges durch eine entsprechende Ansteuerung der Zuführeinrichtung genutzt werden, wenn detektiert worden ist, daß keine einen Stromfluß zwischen Zuführeinrichtung und Oberfläche des Objektträgers erzeugende Flüssigkeitsbrücke zwischen diesen appliziert worden ist.

Gemäß der vorliegenden Erfindung wird desweiteren eine Vorrichtung zur Detektion der Übertragung einer Probenmenge eines Biopolymers von einer Zuführeinrichtung an die Oberfläche eines Objektträgers vorgeschlagen, wobei die Zuführeinrichtung ein einen Stromfluß bewirkenden Leiter enthält, der über die Probenflüssigkeit mit einer ein leitendes Material enthaltenen Oberfläche des Objektträgers mit einem Anschluß ein Signal generiert.

Im Vergleich mit der aus dem Stand der Technik bekannten Lösung, die Qualität eines Biopolymer-Feldes mit Videokameras zu überwachen und deren Signale weiterzuverarbeiten, stellt die erfindungsgemäße Lösung eine wesentlich einfachere und zuverlässiger arbeitende Echtzeitkontrollmöglichkeit dar. Der elektrische Leiter, der mit dem elektrischen Anschluß des Objektträgers zusammenarbeitet, kann in vorteilhafter Weise in die Fassung des als Zuführeinrichtung für die Probenflüssigkeit dienende Kapillarröhrchen eingelassen sein und zusammen mit dem Anschluß des Objektträgers einfach mit einer Spannungsquelle verbunden werden.

Gemäß einer weiteren Ausgestaltung des der Erfindung zugrundeliegenden Gedankens kann die Oberfläche des Objektträgers aus elektrisch leitfähigem Kunststoff bestehen, während der Objektträger selbst aus einem preiswerteren Material gefertigt sein kann. Die Oberfläche des Objektträgers kann aus metallischem Material bestehen, beispielsweise in einem aufgebrachten dünnen Metallplättchen.

Schließlich ist es auch denkbar, den Träger für die Proben aus Glas oder Kunststoff zu fertigen, und durch Aufbringen eines leitfähigen Materials elektrisch leitfähig zu machen. Die leitfähige Beschichtung des aus preiswerterem Material beschaffenen Objektträgers kann ein elektrisch leitfähiges Polymer sein. Die elektrisch leitfähige Beschichtung kann desweiteren aus Metall oder aus einem Halbleitermaterial bestehen. Als Halbleitermaterial kann beispielsweise Indium-Zinn-Oxid eingesetzt werden, wobei aus Kostengründen nicht die gesamte Oberfläche der Beschichtung des Objektträgers mit einem leitfähigen Material beschichtet zu sein braucht, sondern bei bestimmten Anwendungsfällen eine Beschichtung von Teilbereichen der Objekträgeroberfläche mit leitfähigem Material ausreichend sein kann.

Anhand der Zeichnung wird die Erfindung nachstehend näher erläutert.

Die einzige Figur zeigt eine schematische Darstellung einer zur Echtzeitkontrolle eines Biopolymer-Arrays dienenden Anordnung.

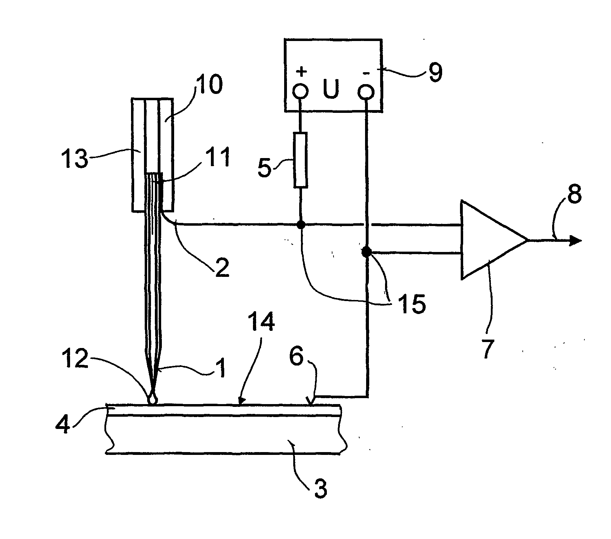

Gemäß der in Figur 1 dargestellten Anordnung ist die Kapillarspitze 1 eines Kapillarröhrchens 11 an eine Oberfläche 4 eines Objekträgers 3 angestellt. Die Oberfläche 4 des Objekträgers 3 enthält eine leitfähige Beschichtung 14. Die leitfähige Beschichtung 14 kann aus einem elektrisch leitfähigen Polymer bestehen. Sie kann aus Metall gefertigt sein oder ein Halbleitermaterial enthalten.

Als zu applizierendes Halbleitermaterial auf der Oberfläche 4 des Objektträgers 3 hat sich Indium-Zinn-Oxid bewährt; es ließen sich selbstverständlich auch andere Halbleitermaterialien als leitfähiges Material auf der Oberfläche 4 des Objektträgers 3 aufbringen.

Der Objektträger 3 besteht demgegenüber aus einem preiswerten Werkstoff, wie beispielsweise Kunststoff, Metall oder Glas. In der Fassung 13 des Kapillarröhrchens 11 ist ein elektrischer Leiter 2 vorgesehen, der mit der im Innenraum des Kapillarröhrchens 11 vorhandenen Probenflüssigkeit in elektrischer Verbindung steht, welcher das Kapillarröhrchen 11 an seinem unteren Ende im Bereich der Kapillarspitze 1 in Richtung auf die Oberfläche 14 des Objektträgers 3 verläßt. Der Leiterdraht 2 ist mit einem Eingang eines Verstärkers 7 verbunden und über einen Vorwiderstand 5 von beispielsweise 10 Mega-Ohm an eine Spannungsquelle 9 angeschlossen. Die Oberfläche 4 mit leitfähigem Material 14 wird durch einen federnd an diesen angestellten Anschluß 6 über eine Zuleitung mit der Spannungsquelle 9 verbunden. Der federnde Anschlag 6 ist ebenfalls mit einem Eingang des Verstärkers, der insbesondere hochohmig ausgeführt ist, verbunden, in welchem ein Rückmeldesignal 8 generiert wird. An den Spannungsabgriffspunkten 15 ist der Leiterdraht 2 mit der Vorwiderstand 5 der Spannungsquelle 9 verbunden sowie der federnd an die Oberfläche 4 angestellte Anschlag 6 mit dem Eingang des hochohmigen Verstärkers 7.

Zur Übertragung der kleinsten Flüssigkeitsmengen im Pico- und Nanoliter-Bereich wird beispielsweise eine zu einer feinen Spitze mit etwa 100 Mikrometer Durchmesser ausgezogene Glaskapillare 1 verwendet, die einen dünnen Leiterdraht 2 umschließt, mit dem der elektrische Anschluß der zu übertragenden Biopolymerprobe erfolgt. Die Flüssigkeit ist durch darin enthaltene Pufferionen elektrisch leitfähig.

Als Objektträger 3 für die zu erstellenden Biopolymer-Felder oder -Arrays können in der Mikroskopie übliche Objektträger mit einer leitfähigen Beschichtung 14 beispielsweise mit dem Halbleitermaterial Indium Zinn Oxid eingesetzt werden; die über einen federnd an diesen angestellten Anschluß 6 elektrisch kontaktiert werden. Um eine kovalente feste chemische Verbindung und eine elektrostatische Anbindung der zu übertragenden Biopolymere an die Oberfläche 4 des Objektträgers 3 zu erreichen, die mit einem leitfähigen Material 14 beschichtet ist, kann eine dünne Polymerschicht, zum Beispiel Polylysin oder Polyethylenimin auf die leitfähige Beschichtung 14 aufgetragen werden.

Zwischen dem Objektträger 3 und der darin aufgenommenen Oberfläche 4 samt leitfähiger Beschichtung und der Flüssigkeit im Kapillarröhrchen 11 wird eine Spannung von etwa 5 Volt über einem Vorwiderstand 5 von beispielsweise 10 Mega-Ohm angelegt. Ist es zu einem Flüssigkeitskontakt zwischen der Kapillarspitze 1 und der leitfähigen Beschichtung 14 der an der Oberfläche 4 des Objektträgers 3 gekommen, wird die Meßspannung kurzgeschlossen, da der Leiterdraht 2 sowie der Anschluß 6, der mit der leitfähigen Beschichtung 14 in Kontakt steht, mit einer Spannungsquelle 9 in Verbindung stehen. Das Vorliegen einer Flüssigkeitsbrücke 12 zwischen der Öffnung der Kapillarspitze 1 und der mit einer leitfähigen Beschichtung 14 versehenen Oberfläche 4 des Objektträgers, wird beispielsweise anhand eines hochohmigen Verstärkers 7 festgestellt und als Rückmeldesignal 8 von diesem für den erfolgten Flüssigkeitskontakt an den steuernden Rechner weitergeleitet.

Weitere Ausführungsmöglichkeiten elektrischer Schaltungen zur Herbeiführung der Detektion des Flüssigkeitskontaktes sind dem Fachmann durchaus ersichtlich und können alternativ eingesetzt werden.

Hat der erwartete Flüssigkeitskontakt in Form der Ausbildung einer Flüssigkeitsbrücke nicht stattgefunden, wird dem Rechner, der die Zuführeinrichtung 1 steuert, ein Befehl erteilt, den Befüllungs- und Übertragungsvorgang zu wiederholen, bis eine Rückmeldung des Flüssigkeitskontaktes in Gestalt der Ausbildung einer Flüssigkeitsbrücke 12 zwischen der Kapillarspitze 1 und der leitfähigen Beschichtung 14 der Oberfläche 4 erfolgt. Nach mehreren erfolglosen Versuchen der Ausbildung einer Flüssigkeitsbrücke 12 zwischen der Öffnung der Kapillarspitze 1 und der leitfähigen Beschichtung 14 des Objektträgers 3 erfolgt ein entsprechender Eintrag in das Fehlerprotokoll des Steuerrechners.

Damit läßt sich unmittelbar bei der Herstellung eines Biopolymer Feldes bzw. Biopolymer-Arrays ein Fehler durch eine mangelhaft aufgebrachte Probe detektieren. Das erfindungsgemäß erzeugte Rückmeldesignal 8 kann demnach neben einer automatischen Auslösung einer Wiederholung des Übertragungsvorganges auch zur Erzeugung einer Dokumentation eines beobachteten Fehlers bei der Biopolymer-Übertragung verwendet werden. In weiterer Ausgestaltung des der Erfindung zugrundeliegenden Gedankens wird das Kapillarröhrchen so lange auf die Oberfläche 14 zubewegt, bis ein elektrisch leitender Kontakt entsteht. In dieser Ausführungsmöglichkeit dient das Rückmeldesignal zur Rückmeldung der Aufsetzbewegung des Biopolymer übertragenden Werkzeuges, beispielsweise eines Kapillarröhrchens.

Neben der Ausbildung der leitfähigen Beschichtung 14 auf dem Träger 4 des Objektträgers 3 aus metallischem Material oder Halbleiterverbindungen, wie das erwähnte Indium-Zinn-Oxid, läßt sich diese auch aus Kohlenstoff oder Kohlenstoffverbindungen enthaltende Material herstellen.

### Bezugszeichenliste

- 1: Kapillarspitze / Zuführeinrichtung
- 2: Leiterdraht
- 3: Objektträger
- 4: Oberfläche
- 5: Vorwiderstand
- 6: federnder Anschluß
- 7: Verstärker
- 8: Rückmeldesignal
- 9: Spannungsquelle
- 10: Kapillarkopf
- 11: Kapillarröhrchen
- 12: Probenflüssigkeit, Biopolymerprobe
- 13: Fassung
- 14: leitfähige Beschichtung
- 15: Spannungsabgriffspunkt

## Patentansprüche

1. Verfahren zur Feststellung der Probensubstanzübernagung bei der Herstellung von Biopolymer-Feldern auf der Oberfläche (4) von Objektträgern (3) *mit einer ein leitfähiges Material (14) enthaltenden Oberfläche (4, 14) des Objektträgers,* **dadurch gekennzeichnet, dass** dessen elektrische Verbindung über die Probenflüssigkeit (12) zur Zuführeinrichtung (1) als Rückmeldesignal (8) dient, *wobei das Rückmeldesignal* (8) *zur automatischen Auslösung einer Wiederholung des Übertragungsvorgangs durch eine entsprechende Ansteuerung der Zuführeinrichtung (1) nutzbar ist.*

2. Verfahren gemäß Anspruch 1, **dadurch gekennzeichnet, dass** die Kontrolle des Flüssigkeitskontaktes der Probenflüssigkeit (12) und Oberfläche (4) des Objektträgers (3) in Echtzeit während der Applikation der Probenflüssigkeit erfolgt.

3. Verfahren gemäß Anspruch 1, **dadurch gekennzeichnet, dass** das Rückmeldesignal (8) aus einem Stromfluß zwischen der Zuführeinrichtung (1) und der Oberfläche (4) des Obejektträgers (3) generiert wird.

4. Verfahren gemäß Anspruch 3, **dadurch gekennzeichnet, dass** das aus einem detektierten Stromfluß hervorgehende Meßsignal durch eine Verstärkeranordnung (7) zu einem weiterverarbeitbaren Rückmeldesignal (8) aufbereitet wird.

5. Verfahren nach Anspruch 1, **dadurch gekennzeichnet, dass** das Rückmeldesignal zur genauen Positionierung des Probensubstanzträgers in Z-Richtung während des Übertagungsvorganges genutzt wird.

6. Verfahren gemäß Anspruch 1, **dadurch gekennzeichnet, dass** das Rückmeldesignal (8) zur automatischen Dokumentation eines Fehlers bei der Übertragung der Probenflüssigkeit (12) auf die Oberfläche (4) des Objektträgers (3) genutzt wird.

7. *Vorrichtung zur Detektion der Übertragung einer Probenflüssigkeit (12) eines in einer Flüssigkeit gelösten Biopolymers mit einer Zuführeinrichtung (1), die einen Leiter* (2) *umfasst, mit einem elektrischen Anschluss (6) und einem Objektträger (3), wobei der elektrische Anschluss (6) federnd an ein* *leitfähiges Material einer Oberfläche (4) des Objektträgers (3) angestellt wird, wobei an dem Leiter (2) und dem elektrischen Anschluss (6) Spannungsabgriffspunkte (15) vorgesehen sind und die Spannungsabgriffspunkte (15) mit einer Spannungsquelle (9) verbunden sind, wobei an den Spannungsabgriffspunkten (15) Mittel (5, 7) angeschlossen sind zur Generierung eines Rückmeldesignals (8) bei einem Stromfluss über die Probenflüssigkeit (12), wobei der Objektträger (3) eine ein leitendes Material (14) enthaltende Oberfläche (4) aufweist.*

8. Vorrichtung nach Anspruch 7, **dadurch gekennzeichnet, dass** die Oberfläche (4) des Objektträgers (3) aus elektrisch leitfähigem Kunststoff besteht.

9. Vorrichtung nach Anspruch 7, **dadurch gekennzeichnet, dass** die Oberfläche (4) des Objektträgers (3) metallisches Material enthält.

10. Vorrichtung nach Anspruch 7, **dadurch gekennzeichnet, dass** der Objektträger (3) aus Glas oder Kunststoff besteht und durch Aufbringen eines leitfähigen Materials (14) leitfähig gemacht wird.

11. Vorrichtung nach Anspruch 10, **dadurch gekennzeichnet, dass** die leitfähige Beschichtung (14) ein elektrisch leitfähiges Polymer ist.

12. Vorrichtung nach Anspruch 10, **dadurch gekennzeichnet, dass** das leitfähige Material (14) Metall ist.

13. Vorrichtung nach Anspruch 10, **dadurch gekennzeichnet, dass** das leitfähige Material ein Halbleitermaterial ist.

14. Vorrichtung nach Anspruch 13, **dadurch gekennzeichnet, dass** der Halbleiter Indium-Zinn-Oxid enthält.

## Claims

1. A process for the determination of the transfer of a sample substance in the production of biopolymer fields on the surface (4) of specimen slides (3), with a surface (4, 14) of the specimen slide comprising a conductive material (14), **characterized in that** the electrical connection of which to the feed device (1) via the sample liquid (12) serves as acknowledgement signal (8), the acknowledgement signal (8) being able to be used for automatic initiation of a repetition of the transfer operation by corresponding addressing of the feed device (1).

2. A process as claimed in claim 1, **characterized in that** the monitoring of the liquid contact of the sample liquid (12) and the surface (4) of the specimen slide (3) takes place in real time during application of the sample liquid.

3. A process as claimed in claim 1, **characterized in that** the acknowledgement signal (8) is generated from a current flow between the feed device (1) and the surface (4) of the specimen slide (3).

4. A process as claimed in claim 3, **characterized in that** the measurement signal emanating from a detected current flow is converted by an amplifier arrangement (7) into an acknowledgement signal (8) which can be processed further.

5. A process as claimed in claim 1, **characterized in that** the acknowledgement signal is utilized for precise positioning of the sample substance carrier in the Z-direction during the transfer operation.

6. A process as claimed in claim 1, **characterized in that** the acknowledgement signal (8) is utilized for automatic documentation of an error during transfer of the sample liquid (12) onto the surface (4) of the specimen slide (3).

7. A device for the detection of the transfer of a sample liquid (12) of a biopolymer dissolved in a liquid with a feed device (1) which feed device (1) comprises a conductor (2), with an electrical connection (6) and a specimen slide (3), the electrical connection (6) being positioned resiliently against a conductive material of a surface (4) of the specimen slide (3), voltage tap points (15) being provided on the conductor (2) and the electrical connection (6) and the voltage tap points (15) being connected to a voltage source (9), means (5,7) being connected to voltage tap points (15) to generate an acknowledgement signal (8) during a flow via the sample liquid (12), the specimen slide (3) having a surface (4) that comprises a conductive material (14).

8. A device as claimed in claim 7, **characterized in that** the surface (4) of the specimen slide (3) consists of electrically conductive plastic.

9. A device as claimed in claim 7, **characterized in that** the surface (4) of the specimen slide (3) comprises metallic material.

10. A device as claimed in claim 7, **characterized in that** the specimen slide (3) consists of glass or plastic and is rendered conductive by application of a conductive material (14).

11. A device as claimed in claim 10, **characterized in that** the conductive coating (14) is an electrically conductive polymer.

12. A device as claimed in claim 10, **characterized in that** the conductive material (14) is metal.

13. A device as claimed in claim 10, **characterized in that** the conductive material is a semiconductor material.

14. A device as claimed in claim 13, **characterized in that** the semiconductor comprises indium-tin oxide.

## Revendications

1. Procédé de constatation du transfert de substance échantillon au cours de la préparation de zones de biopolymère sur la surface (4) de porte-objet (3) comportant une surface (4, 14) du porte-objet contenant une matière conductrice (14), **caractérisé en ce que** sa liaison électrique au dispositif d'amenée (1) par l'intermédiaire du liquide échantillon (12) sert de signal de réplique (8), le signal de réplique (8) étant exploitable pour le déclenchement automatique d'une répétition du processus de transfert par une excitation correspondante du dispositif d'amenée (1).

2. Procédé suivant la revendication 1, **caractérisé en ce que** le contrôle du contact de liquide entre le liquide échantillon (2) et la surface (4) du porte-objet (3) a lieu en temps réel pendant l'application du liquide échantillon.

3. Procédé suivant la revendication 1, **caractérisé en ce que** le signal de réplique (8) est engendré par une conduction de courant entre le dispositif d'amenée (1) et la surface (4) du porte-objet (3).

4. Procédé suivant la revendication 3, **caractérisé en ce que** le signal de mesure découlant d'une conduction de courant détectée est traité par un agencement d'amplificateur (7) en un signal de réplique (8) transformable ultérieurement.

5. Procédé suivant la revendication 1, **caractérisé en ce que** le signal de réplique est utilisé pour le positionnement précis du support de substance échantillon dans la direction Z pendant le processus de transfert.

6. Procédé suivant la revendication 1, **caractérisé en ce que** le signal de réplique (8) est utilisé pour la documentation automatique d'une erreur lors du transfert du liquide échantillon (12) sur la surface (4) du porte-objet (3).

7. Dispositif pour la détection du transfert d'un liquide échantillon (12) d'un biopolymère dissous dans un liquide, comportant un dispositif d'amenée (1), qui comporte un conducteur (2), un raccordement électrique (6) et un porte-objet (3), le raccordement électrique (6) étant mis en place de manière élastique sur une matière conductrice d'une surface (4) du porte-objet (3), des points de prise de tension (15) étant prévus sur le conducteur (2) et le raccordement électrique (6) et les points de prise de tension (15) étant connectés à une source de tension (9), des moyens (5, 7) étant raccordés aux points de prise de tension (15) pour engendrer un signal de réplique (8) lors d'une conduction de courant par le liquide échantillon (12), le porte-objet (3) présentant une surface (4) contenant une matière conductrice (14).

8. Dispositif suivant la revendication 7, **caractérisé en ce que** la surface (4) du porte-objet (3) est constituée d'une substance synthétique électriquement conductrice.

9. Dispositif suivant la revendication 7, **caractérisé en ce que** la surface (4) du porte-objet (3) contient une matière métallique.

10. Dispositif suivant la revendication 7, **caractérisé en ce que** le porte-objet (3) est constitué de verre ou de matière synthétique et est rendu conducteur par application d'une matière conductrice (14).

11. Dispositif suivant la revendication 10, **caractérisé en ce que** l'enduction conductrice (14) est un polymère électriquement conducteur.

12. Dispositif suivant la revendication 10, **caractérisé en ce que** la matière conductrice (14) est du métal.

13. Dispositif suivant la revendication 10, **caractérisé en ce que** la matière conductrice est une matière semi-conductrice.

14. Dispositif suivant la revendication 13, **caractérisé en ce que** le semi-conducteur contient un oxyde d'indium-étain.
